# FASCICULE DE BREVET EUROPEEN

(11) **EP 1 062 735 B1**
(45) Date de publication et mention de la délivrance du brevet: **05.06.2002**
(21) Numéro de dépôt: 99939237.6
(22) Date de dépôt: 25.02.1999
(51) Int. Cl.: H04B 1/38, H04M 1/72, G06F 1/32, H04B 15/04

(54) **DISPOSITIF ELECTRONIQUE POUR LA RADIO TRANSMISSION D'INFORMATIONS ET CARTE ELECTRONIQUE EQUIPEE D'UN TEL DISPOSITIF**
ELEKTRONISCHE KARTE MIT ELEKTRONISCHEM GERÄT FÜR DATENKOMMUNIKATION
ELECTRONIC DEVICE FOR DATA RADIO TRANSMISSION AND ELECTRONIC CARD EQUIPPED WITH SAME

(30) Priorité: 09.03.1998 FR 9802842
(43) Date de publication de la demande: 27.12.2000
(73) Titulaire: Adcon RF Technology S.A., 06560 Valbonne (FR)
(72) Inventeur: NOUAILHETAS, Yves, F-78000 Versailles (FR)
(74) Mandataire: Breese, Pierre
(86) Numéro de dépôt international: FR9900431
(87) Numéro de publication internationale: WO9946865

(56) Documents cités:
- US-A- 4 868 561
- US-A- 5 483 465
- US-A- 5 630 224

## Description

La présente invention concerne le domaine de la transmission d'information sans fil.

Une tendance générale, dans un grand nombre de secteurs d'application tant industriels que grand public, concerne le remplacement des liaisons filaires par des liaisons radio. On peut citer à titre d'exemple d'application les terminaux de paiement électroniques, les terminaux portatifs de contrôle et d'acquisition de données industrielles, et plus généralement de nombreux périphériques portables.

A cet effet, les périphériques intègrent un module radio comportant des moyens d'entrée/sortie des signaux à transmettre à un équipement distant, et des moyens H.F.

Il est connu dans l'art antérieur de piloter ces' moyens H.F. par un microprocesseur. En particulier, la fréquence de fonctionnement, la puissance, et le mode de transmission peuvent être pilotés numériquement.

La difficulté provient du fait que l'optimisation des fonctions H.F. nécessite un savoir-faire très spécifique. En effet, des paramètres souvent négligés dans la conception de cartes électroniques prennent une importance majeure dans le domaine de la transmission H.F. Il en est ainsi des problèmes de rayonnements parasites de composants tels que certains microprocesseurs, de bobines, de convertisseurs de fréquence, de la sensibilité de certaines parties conductrices pouvant former antenne, etc.

Pour ces raisons, l'homme du métier du domaine de la micro-informatique ne dispose par des compétences de l'homme du métier du domaine de la radio-transmission, et inversement.

Dans l'art antérieur, les périphériques à liaison sans fil sont conçus sous forme de juxtaposition des fonctions radio et des fonctions complémentaires. De ce fait, le dispositif global n'est pas optimisé et de nombreux dysfonctionnements semblent inexplicables.

L'objet de la présente invention est de remédier à ces inconvénients en proposant un dispositif de liaison radiofréquence permettant d'apporter les fonctionnalités de radio-transmission à diverses réalisations électroniques conçus sans réelle prise en compte des contraintes inhérentes au développement de systèmes radiofréquences. Dans l'art antérieur, les périphériques à liaison sans fil sont conçus sous forme de juxtaposition des fonctions radio et des fonctions complémentaires. De ce fait, le dispositif global n'est pas optimisé en de nombreux dysfonctionnements semblent inexplicables.

A titre d'exemple, on connaît le brevet américain US5,483,465 divulgue un terminal de type GSM. Il ne décrit pas la séparation physique entre les composants radio et les composants informatiques. A fortiori, il ne décrit pas le pilotage du calculateur d'un module "radio" par des instructions ou informations extérieures.

Le brevet américain US4868561 concerne un "pager" comportant seulement un récepteur, et non pas un émetteur-récepteur. Il expose certes des fonctions de pilotage, mais il s'agit du pilotage non pas des fonctions radio, mais des applicatifs "aval", notamment pour la personnalisation des alertes.

Le brevet US5,630,224 divulgue un algorithme pour la désensibilisation de l'étage radio, et non pas l'architecture physique permettant d'éviter ou au moins de réduire les interférences entre l'étage H.F. et l'applicatif informatique.

L'invention concerne un dispositif pour la radio-transmission d'informations comportant un circuit d'émission et de réception. Le problème technique qui se pose avec de tels dispositifs est celui de la nécessaire maîtrise de deux technologies mettant en oeuvre des savoir-faire différents :
- la technologie "radio" mettant en oeuvre le savoir-faire dans le domaine de la H.F.
- la technologie informatique, mettant en oeuvre le savoir-faire spécifique aux signaux numérique, aux algorithmes et aux applicatifs informatiques.

Les contraintes techniques de ces deux domaines sont différentes et contradictoires sur certains aspects. Notamment, la technologie "radio" implique une maîtrise très grande de la protection contre les perturbations électromagnétiques, le bruit H.F, etc. Les solutions relèvent de tour de main, de définition de la géométrie des circuits et des composants, d'optimisation de l'implantation des composants, et de compétences dans le domaine de l'électromagnétisme.

Ces compétences se trouvent rarement chez des informaticiens, qui maîtrisent par contre parfaitement la partie algorithmique.

L'invention vise à proposer un dispositif permettant d'éviter les problèmes posés par la conception de circuits de radio-transmission de données numériques, en proposant une architecture nouvelle dans laquelle on sépare : - les éléments relevant de la technologie radio, qui se retrouvent dans un composant électronique intégré
- les éléments relevant de la technologie informatique, se trouvant sur un circuit classique.

Les deux éléments doivent bien sur interagir. Pour cela, le module intégré "radio" incorpore une unité centrale pilotable de l'extérieur par des informations (instructions, signaux) extérieurs au module intégré.

Il y a donc un désaccouplement physique des éléments présentant des contraintes contradictoires, avec une liaison par l'intermédiaire d'une unité centrale paramétrable, pouvant être conçu selon des technologies radio, dans le respect des contraintes radio (bruit, consommation). Les éléments radio sont optimisés en réduisant au maximum la surface du composant radio, et en traitant efficacement le module contre les interférences électromagnétiques.

L'objet de la présente invention est de remédier à ces inconvénients en proposant un dispositif de liaison permettant d'apporter les fonctionnalités de radio-transmission à divers circuits électroniques conçus sans réelle prise en compte des paramètres propres au développement de circuits radiofréquences.

A cet effet, l'invention concerne dans son acception la plus générale un dispositif électronique pour la radio-transmission d'informations, comprenant un circuit d'émission-réception haute-fréquence et des moyens d'interface entrée-sortie numérique et/ou analogique caractérisé en ce que le dispositif est réalisé sous la forme d'un composant électronique intégré comprenant en outre une unité de calcul pour le pilotage des fonctions radio.

Préférentiellement, le composant électronique comporte une unité centrale équipée d'une mémoire téléchargeable pour le pilotage du circuit d'émission-réception. Cette mémoire pourra être chargée avec un programme spécifique et personnalisable, pour les fonctions de pilotage d'émission et de réception.

Avantageusement, le dispositif permet en outre le pilotage de fonctions additionnelles par des applicatifs chargés dans cette mémoire téléchargeable.

Sous une forme de réalisation avantageuse, le composant comporte une sortie délivrant un signal d'inactivation lors du fonctionnement du circuit d'émission-réception H.F. Ce signal met en mode réduit de moindre activité les composants informatiques extérieurs au module pendant la phase de réception et/ou d'émission. Cette fonction est destinée à réduire, pendant certaines phases critiques de fonctionnement du module radio, l'activité du processeur de l'applicatif, qui peut générer du bruit et donc gêner l'émission ou la réception.

Selon un mode de réalisation avantageux, le composant intègre en outre une unité de calcul pour le pilotage des fonctions radio.

Selon une variante particulière, le composant intègre en outre une mémoire ROM dans laquelle est enregistrée une bibliothèque de fonctions radio.

Avantageusement, le dispositif comprend une antenne H.F.

L'invention concerne également un carte électronique comportant des moyens de radio-transmission caractérisée en ce que lesdits moyens de radio-transmission sont constitués par un composant intégré comportant un circuit d'émission-réception haute-fréquence et des moyens d'interface entrée-sortie numérique et/ou analogique, ledit composant intégré étant disposé dans une zone périphérique latérale de la carte. Ce mode de réalisation permet de limiter le couplage électromagnétique et les interférences entre les éléments radio et les applicatifs.

Préférentiellement, certains composants de la carte sont désactivables par un signal généré par ledit composant intégré.

Selon une variante avantageuse, le composant intégré - excepté son antenne s'il en comporte une - est entouré par un blindage électrique.

L'invention sera mieux comprise à la lecture de la description qui suit, se référant aux dessins annexés où:
- la figure 1 représente une schéma de principe du dispositif ;
- la figure 2 représente une vue en perspective d'une carte équipée d'un tel dispositif.
- la figure 3 représente une vue en perspective d'une variante d'une carte équipée d'un tel dispositif.

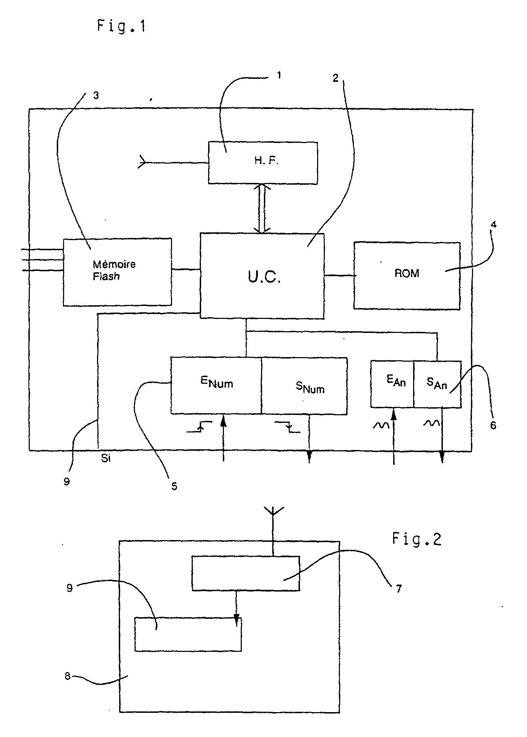

La figure 1 représente un schéma de principe d un dispositif de radio-transmission selon l'invention. Le dispositif est réalisé sous forme d'un circuit hybride.

Il comporte un étage H.F. (1) pilotable par un microprocesseur (2). Ce microprocesseur (2) comporte une mémoire téléchargeable (3) permettant d'enregistrer des paramètres temporaires. Les fonctions spécifiques de pilotages de l'étage H.F. sont enregistrées dans une mémoire ROM (4) sous forme de bibliothèque de fonctions.

Ces fonctions sont par exemple :
- le choix de la fréquence pour la réception;
- le choix de la fréquence pour l'émission;
- le codage-décodage des signaux;
- le protocole de communication.

Le microprocesseur (2) communique par ailleurs avec une mémoire vive de type "mémoire flash" dans laquelle l'utilisateur peut enregistrer ses fonctions applicatives et les fonctions et caractéristiques spécifiques de ses liaisons H.F.

Le composant peut ainsi être personnalisé et piloté par téléchargement d'un code appelant une bibliothèque de fonctions enregistrée dans la mémoire ROM, par exemple :
- la transmission d'une trame ;
- la réception d'une trame ;
- la programmation d'un canal ;
- la recherche d'un canal libre ;
- l'initialisation sur un canal ;
- la transmission d'une trame sur le canal initialisé ;
- la définition de la destination des signaux ;
- la mise en veille de la partie radio ;
- la vérification de la présence d'un signal radio.

Des fonctions additionnelles peuvent être chargées dans la mémoire (3), par exemple des applicatifs de commande d'un écran d'affichage ou de voyants de contrôle. Ce mode de réalisation permet de simplifier la conception de la carte électronique associée au dispositif selon l'invention.

Le microprocesseur (2) peut commander et échanger des signaux avec l'environnement extérieur par ailleurs avec une première série d'interfaces d'entrée/sortie (5) de type numérique et une deuxième série d'interfaces d'entrée/sortie (6) de type analogique. Ces interfaces permettent en particulier le pilotage du processeur par l'applicatif extérieur.

L'ensemble du circuit est réalisé en technologie hybride ou intégrée, sous forme d'un composant d'une surface inférieure à 6 cm². Ce composant (7) peut être soudé à l'extrémité d'une carte électronique (8), ce qui réduit les perturbations électromagnétiques provenant d'un microprocesseur (9) ou de certains composants de ladite carte électronique.

Par ailleurs, le pilotage des fonctions radiofréquences par le microprocesseur (2) intégré au composant évite le recours aux ressources informatiques extérieures.

Le microprocesseur (2) génère par ailleurs un signal de désactivation (9), par exemple lors de la transmission d'une trame. Ce signal de désactivation peut être utilisé pour interrompre le fonctionnement du microprocesseur ou des composants "bruyants" du circuit principal (8).

Selon une variante de réalisation, le module radio intégré est surmoulé avec l'antenne, pour former un composant pouvant être raccordé par l'intermédiaire d'un connecteur à un module informatique.

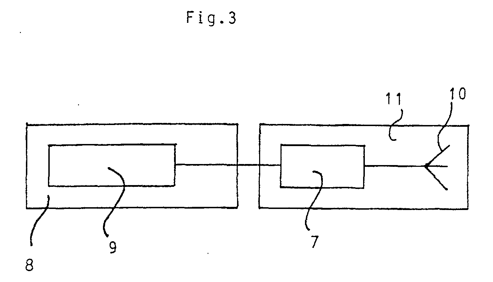

La figure 3 représente une variante de réalisation dans laquelle le dispositif radio est formé par un élément encapsulé dans une résine (11). Il comporte un composant radio intégré (7) relié à la carte (8) par un connecteur, ou par soudure.

L'invention est décrite dans ce qui précède à titre d'exemple non limitatif.

## Revendications

1. Dispositif électronique pour la radio-transmission d'informations, comprenant un circuit d'émission-réception haute-fréquence (1) et des moyens d'interface entrée-sortie numérique (5) et/ou analogique (6) **caractérisé en ce que** le dispositif est réalisé sous la forme d'un composant électronique intégré (7) et **en ce qu'**il intègre en outre un microprocesseur ou unité de calcul (2) pilotable de l'extérieur par des informations, p. ex. des instructions ou des signaux, extérieures au composant intégré, pour le pilotage des fonctions radio.

2. Dispositif électronique pour la radio-transmission d'informations selon la revendication 1 **caractérisé en ce que** l'unité de calcul (2) est équipée d'une mémoire vive (3) pour la mémorisation des programmes du pilotage du circuit d'émission-réception.

3. Dispositif électronique pour la radio-transmission d'informations selon la revendication 1 ou 2 **caractérisé en ce qu'**il comporte une sortie délivrant un signal d'inactivation lors du fonctionnement du circuit d'émission-réception H.F. (1)

4. Dispositif électronique pour la radio-transmission d'informations selon l'une au moins des revendications précédentes **caractérisé en ce que** la mémoire vive (3) téléchargeable est en outre destinée à l'enregistrement de programmes applicatifs pour le pilotage de fonctions additionnelles.

5. Dispositif électronique pour la radio-transmission d'informations selon l'une au moins des revendications précédentes **caractérisé en ce qu'**il comporte au moins une interface (5, 6) pour le pilotage de l'unité de calcul (2) par un applicatif extérieur.

6. Dispositif électronique pour la radio-transmission d'informations selon l'une au moins des revendications précédentes **caractérisé en ce qu'**il intègre en outre une mémoire ROM dans laquelle est enregistrée une bibliothèque de fonctions radio.

7. Dispositif électronique pour la radio-transmission d'informations selon l'une au moins des revendications précédentes **caractérisé en ce qu'**il comporte une antenne H.F. (10).

8. Carte électronique comportant des moyens informatique et des moyens de radio-transmission **caractérisée en ce que** lesdits moyens de radio-transmission sont constitués par un composant intégré (7) comportant un circuit d'émission-réception radio (1), un micro processeur unité centrale (2) et des moyens d'interface entrée-sortie numérique (5) et/ou analogique (7) pour le pilotage de l'unité centrale (2) par un applicatif externe, et des moyens externes au composant radio intégré, pour l'applicatif.

9. Carte électronique comportant des moyens informatique et des moyens de radio-transmission selon la revendication 8 **caractérisée en ce que** ledit composant radio intégré (7) étant disposé dans une zone périphérique de la carte (8).

10. Carte électronique comportant des moyens de radio-transmission selon la revendication 8 ou 9 **caractérisée en ce que** certains composants de la carte sont désactivables par un signal généré par ledit composant radio intégré (7).

11. Carte électronique comportant des moyens de radio-transmission selon la revendication 8 ou 9 **caractérisée en ce que** le composant radio intégré (7) est entouré par un blindage électrique.

12. Carte électronique comportant des moyens de radio-transmission selon la revendication 11 **caractérisée en ce que** le composant radio intégré (7) est surmoulé avec une antenne (10) pour former un composant raccordable à un circuit informatique.

## Patentansprüche

1. Elektronisches Gerät zur Funkübertragung von Informationen, bestehend aus einem Hochfrequenz-Sendeund Empfangskreis (1) sowie Schnittstellen mit digitalen (5) und/oder analogen (6) Ein- und Ausgängen, **dadurch gekennzeichnet, dass** das Gerät in Form eines integrierten elektronischen Bauteils (7) ausgeführt ist und dadurch, dass es außerdem einen Mikroprozessor als Rechenwerk (2) enthält, der von außen durch Informationen, wie z.B. Anweisungen oder Signale, gesteuert werden kann, die zur Steuerung der Funkfunktionen außerhalb des integrierten Bauteils dienen.

2. Elektronisches Gerät für die Funkübertragung von Informationen nach Anspruch 1 **dadurch gekennzeichnet, dass** das Rechenwerk (2) mit einem Schreib-Lesespeicher (RAM) (3) für die Speicherung der Steuerprogramme des Sende- und Empfangskreises ausgestattet ist.

3. Elektronisches Gerät für die Funkübertragung von Informationen nach Anspruch 1 oder 2, **dadurch gekennzeichnet, dass** es einen Ausgang hat, der während des Betriebes des Hochfrequenz-Sende- und Empfangskreises (1) ein Signal für die Inaktivierung abgibt.

4. Elektronisches Gerät für die Funkübertragung von Informationen nach wenigstens einem der vorgenannten Ansprüche, **dadurch gekennzeichnet, dass** der von der Peripherie ladbare Schreib-Lesespeicher (RAM) (3) außerdem für die Speicherung von Anwenderprogrammen zur Steuerung zusätzlicher Funktionen bestimmt ist.

5. Elektronisches Gerät für die Funkübertragung von Informationen nach wenigstens einem der vorgenannten Ansprüche, **dadurch gekennzeichnet, dass** es mindestens eine Schnittstelle (5,6) für die Steuerung des Rechenwerkes (2) durch ein externes Anwenderprogramm hat.

6. Elektronisches Gerät für die Funkübertragung von Informationen nach wenigstens einem der vorgenannten Ansprüche, **dadurch gekennzeichnet, dass** in ihm außerdem ein ROM-Speicher integriert ist, in dem eine Bibliothek mit den Funkfunktionen gespeichert ist.

7. Elektronisches Gerät für die Funkübertragung von Informationen nach wenigstens einem der vorgenannten Ansprüche, **dadurch gekennzeichnet, dass** es mit einer Hochfrequenzantenne (10) ausgestattet ist.

8. Elektronische Karte, die Informatik- und Funkübertragungsmittel enthält, **dadurch gekennzeichnet, dass** die genannten Funkübertragungsmittel aus einem integrierten Bauteil (7) bestehen, das einen Funk-Sendeund Empfangskreis (1), einen Mikroprozessor oder eine Zentraleinheit (2) umfasst, sowie Schnittstellen mit digitalen (5) und/oder analogen (7) Ein- und Ausgängen für die Steuerung der Zentraleinheit (2) durch ein externes Anwenderprogramm sowie Mittel für das Anwenderprogramm außerhalb des integrierten Funkbauteils.

9. Elektronische Karte, die Informatikmittel und Funkübertragungsmittel nach Anspruch 8 umfasst, **dadurch gekennzeichnet, dass** das genannte integrierte Funkbauteil (7) in einem Peripheriebereich der Karte (8) vorgesehen ist.

10. Elektronische Karte mit Funkübertragungsmitteln nach Anspruch 8 oder 9, **dadurch gekennzeichnet, dass** bestimmte Bestandteile der Karte durch ein Signal, das von dem genannten integrierten Funkübertragungsbauteil (7) erzeugt wird, deaktiviert werden können.

11. Elektronische Karte mit Funkübertragungsmitteln nach Anspruch 8 oder 9, **dadurch gekennzeichnet dass** das integrierte Funkübertragungsbauteil (7)eine elektrische Abschirmung aufweist.

12. Elektronische Karte mit Funkübertragungsmitteln, nach Anspruch 11, **dadurch gekennzeichnet, dass** das integrierte Funkübertragungsbauteil (7) mit einer Antenne (10) konfektioniert ist, so dass das genannte Bauteil für die Verbindung mit einem Informatikkreis geeignet ist.

## Claims

1. Electronic device for radio-transmission of data, comprising a high frequency transceiver circuit (1) and digital (5) and/or analog (6) input-output interface means **characterised in that** the device is produced under the form of an integrated electronic component (7) and **in that** it furthermore integrates a microprocessor as computing unit (2) pilotable from outside by information, for example instructions or signals, exterior to the integrated component for piloting radio functions.

2. Electronic device for radio-transmission of data according to claim 1, **characterised in that** the computing unit (2) is equipped with a random access memory (3) for memorising pilot programmes for the transceiver circuit.

3. Electronic device for radio-transmission of data according to either one of claims 1 or 2 **characterised in that** it comprises an output delivering a disabling signal during operation of the H.F. transceiver circuit (1).

4. Electronic device for radio-transmission of data according to at least one of the above claims **characterised in that** the downloadable random access memory (3) is furthermore intended to store application programmes for piloting additional functions.

5. Electronic device for radio-transmission of data according to at least one of the above claims **characterised in that** it comprises at least one interface (5, 6) for piloting the computing unit (2) by an external application.

6. Electronic device for radio-transmission of data according to at least one of the above claims **characterised in that** it further integrates a read-only memory (ROM) in which a library of radio functions is stored.

7. Electronic device for radio-transmission of data according to at least one of the above claims **characterised in that** it comprises an H.F. aerial (10).

8. Electronic board comprising computer means and radio-transmission means **characterised in that** said radio-transmission means are constituted of an integrated component (7) comprising a radio transceiver circuit (1), a microprocessor or central unit (2) and digital (5) and/or analog (7) input-output interface means for piloting the central unit (2) by an outside application, and means external to the integrated radio component, for the application.

9. Electronic board comprising computer means and radio-transmission means according to claim 8, **characterised in that** said integrated radio component (7) is set in a peripheral zone of the board (8).

10. Electronic board comprising radio-transmission means according to either one of claims 8 or 9, **characterised in that** certain components of the board can de disabled by a signal generated by said integrated radio component (7).

11. Electronic board comprising radio-transmission means according to either one of claims 8 or 9, **characterised in that** said integrated radio component (7) is surrounded by an electric shielding.

12. Electronic board comprising radio-transmission means according to claim 11, **characterised in that** said integrated radio component (7) is over-moulded with an aerial (10) to form a component connectable to a computer circuit.
